# EUROPEAN PATENT APPLICATION

(11) **EP 3 550 159 A1**
(43) Date of publication of application: **09.10.2019**
(21) Application number: 17875266.3
(22) Date of filing: 25.10.2017
(51) Int. Cl.: F16B 7/18, B60N 2/68

(54) **CONNECTING ASSEMBLY AND MANUFACTURING METHOD THEREFOR, SEAT AND VEHICLE**

(30) Priority: 29.11.2016 CN 201611076754
(71) Applicant: BYD Company Limited, Shenzhen, Guangdong 518118 (CN)
(72) Inventor: GUO, Qiang, Shenzhen Guangdong 518118 (CN); LI, Weiguo, Shenzhen Guangdong 518118 (CN); WEN, Danhua, Shenzhen Guangdong 518118 (CN)
(74) Representative: m patent group
(86) International application number: PCT/CN2017/107686
(87) International publication number: WO 2018/099213

(57) **Abstract**

The present invention discloses a connecting assembly and a manufacturing method thereof, a seat and a vehicle. The connecting assembly includes: a connecting pipe, an inner wall of at least one end of the connecting pipe being provided with a pre-embedded nut, and the nut being coaxial with the connecting pipe; a connecting plate, the connecting plate being provided with a fixing hole; and a fastener, the fastener penetrating through the fixing hole and being in threaded fit with the nut. The connecting pipe is a light alloy component, and the connecting plate is a steel component. According to the connecting assembly disclosed by the present invention, the connecting pipe is the light alloy component, the inner wall of at least one end of the connecting pipe is provided with the pre-embedded nut, and the fastener sequentially penetrates through the fixing hole on the connecting plate of a steel material and is in threaded fit with the nut at one end of the connecting pipe, thereby realizing connection between the connecting plate of the steel material and the connecting pipe of the light alloy material, solving the problem of connection between the light alloy component and the steel component, and facilitating extensive use of the light alloy component.

## Description

### FIELD

The present invention relates to the field of metal connection technologies, and more particularly, relates to a connecting assembly and a manufacturing method thereof, a seat and a vehicle.

### BACKGROUND

Generally, a light alloy material and a steel material such as carbon steel or high-strength steel cannot be connected through a welding mode, and the light alloy material is lower in strength and rigidity, so that thread tapping is not suitable to implement. If threads are processed on the light alloy material to enable the light alloy material to be connected with the steel material through a fastener, screw slippage easily occurs, so that a product cannot be used normally. Thus, the use and application range of the light alloy material are limited.

### SUMMARY

The present invention aims to solve at least one of the technical problems in the related technology to a certain extent. Therefore, the present invention provides a connecting assembly. The connecting assembly solves the problem of connection between light alloy and a steel component, and facilitates extensive use of light alloy components.

The present invention also provides a seat, including the connecting assembly.

The present invention also provides a vehicle, including the connecting assembly.

The present invention also provides a manufacturing method of a connecting assembly, which is used for manufacturing the connecting assembly.

The connecting assembly according to an embodiment of the present invention includes: a connecting pipe, an inner wall of at least one end of the connecting pipe being provided with a pre-embedded nut, and the nut and the connecting pipe being coaxially arranged; a connecting plate, the connecting plate being provided with a fixing hole; and a fastener, the fastener penetrating through the fixing hole and being in threaded fit with the nut. The connecting pipe is a light alloy component, and the connecting plate is a steel component.

In the connecting assembly according to the embodiments of the present invention, the connecting pipe is the light alloy component, the inner wall of at least one end of the connecting pipe is provided with the pre-embedded nut, and the fastener sequentially penetrates through the fixing hole on the connecting plate of a steel material and is in threaded fit with the nut at one end of the connecting pipe, thereby realizing connection between the connecting plate of the steel material and the connecting pipe of the light alloy material, solving the problem of connection between the light alloy component and the steel component, and facilitating extensive use of the light alloy component.

According to some embodiments of the present invention, the light alloy is magnesium alloy or aluminum alloy.

According to some embodiments of the present invention, the fastener is a bolt fastener.

According to some embodiments of the present invention, the connecting pipe includes: a body, an inner wall of at least one end of the body being provided with a generally annular containing groove, an end surface of one end of the containing groove being flush with an end surface of one end of the body, and the nut being arranged in the containing groove; and a fixing component, at least a part of the fixing component being positioned on an end surface of one end of the body so as to limit the nut in the containing groove.

Specifically, the fixing component includes a first part and an annular second part, the first part is connected to a peripheral wall of the second part and is generally perpendicular to the second part, and when the second part is positioned on the end surface of one end of the body, the first part is positioned on a peripheral wall of one end of the body.

Specifically, the fixing component is welded with the body to be connected.

According to some embodiments of the present invention, the containing groove is processed by a milling process.

Specifically, an outer diameter of the second part is equal to an outer diameter of the body.

The seat according to the embodiments of the present invention includes the light alloy connecting assembly.

The seat according to the embodiments of the present invention is provided with the connecting assembly, thereby realizing connection between the connecting plate of the steel material and the connecting pipe of the light alloy material, solving the problem of connection between the light alloy and the steel component, and being favorable for reducing the mass of the seat.

The vehicle according to the embodiments of the present invention includes the seat.

The vehicle according to the embodiments of the present invention is provided with the seat, thereby being favorable for reducing the overall mass of the vehicle, and further reducing the energy consumption of the vehicle.

The manufacturing method of the connecting assembly according to the embodiments of the present invention includes the following steps:
milling one end of a body to process a containing groove, and putting a nut into the containing groove;
welding an annular fixing component to an end surface of one end of the body;
enabling a fixing hole of a connecting plate to be corresponding to one end, having the annular fixing component, of the connecting pipe; and
enabling a bolt to penetrate through the fixing hole so as to be in threaded fit with the nut.

The manufacturing method of the connecting assembly according to the embodiments of the present invention solves the problem of connection between the light alloy and the steel component, and realizes connection between the connecting plate of the steel material and the connecting pipe of the light alloy material.

### BRIEF DESCRIPTION OF THE DRAWINGS

FIG. 1 is a schematic view of a connecting pipe containing a nut according to some embodiments of the present invention;
FIG. 2 is a cross-sectional view of the connecting pipe shown in FIG. 1 in a direction A-A;
FIG. 3 is a top view of the connecting pipe shown in FIG. 1;
FIG. 4 is a structural view of a fixing component according to some embodiments of the present invention;
FIG. 5 is a schematic view of the fixing component shown in FIG. 4 in another direction;
FIG. 6 is a structural view of a fixing component according to other embodiments of the present invention; and
FIG. 7 is a partial cross-sectional view of a connecting assembly according to the embodiments of the present invention.

### Reference Numerals:

connecting assembly 100;
connecting pipe 1; body 11; fixing component 12; groove 121;
nut 2; connecting plate 3; fastener 4.

### DETAILED DESCRIPTION

Embodiments of the present invention are described in detail as follows. Examples of the embodiments are shown in the accompanying drawing. The embodiments described below with reference to the accompanying drawings are exemplary, and are used for explaining rather than limiting the present invention.

In the description of the present invention, it should be understood that orientation or position relationships indicated by the terms such as "center", "longitudinal", "transverse", "length", "width", "thickness", "on", "below", "left", "right", "vertical", "horizontal", "top", "bottom", "inside", and "outside" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present invention.

In addition, the terms such as "first" and "second" are used only for the purpose of description, and should not be understood as indicating or implying the relative importance or implicitly specifying the number of the indicated technical features. Therefore, a feature defined by "first" or "second" can explicitly or implicitly include one or more of said features. In the description of the present invention, unless otherwise explicitly defined, "a plurality of" means at least two, for example, two, three and the like.

In the present invention, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection, an electrical connection, or mutual communication; or the connection may be a direct connection, an indirect connection through an intermediary, internal communication between two elements, or interactions between two elements, unless otherwise explicitly defined. Persons of ordinary skill in the art may understand the specific meanings of the foregoing terms in the present invention according to specific situations.

In the present invention, unless otherwise explicitly specified or defined, a first feature being "above" or "under" a second feature may include that the first and second features are in direct contact and may also include that the first and second features are not in direct contact but are in contact by means of another feature therebetween. In addition, the first feature being "over", "above" or "on the top of" a second feature may include that the first feature is over or above the second feature or merely indicates that the horizontal height of the first feature is higher than that of the second feature. The first feature being "underneath", "below" or "on the bottom of" a second feature may include that the first feature is underneath or below the second feature or merely indicates that the horizontal height of the first feature is lower than that of the second feature.

A connecting assembly 100 according to the embodiments of the present invention is described below with reference to the drawings.

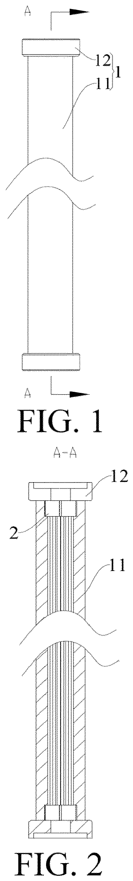

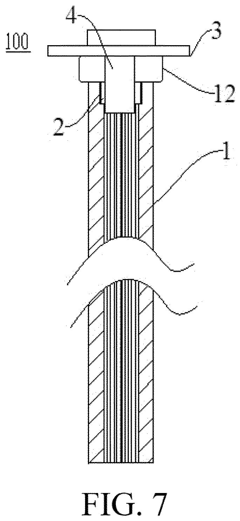

As shown in FIG. 1, FIG. 2 and FIG. 7, the connecting assembly 100 according to the embodiments of the present invention can include a connecting pipe 1, a connecting plate 3 and a fastener 4.

Specifically, the connecting pipe 1 is a light alloy component. Optionally, the light alloy is magnesium alloy or aluminum alloy. In other words, the connecting pipe 1 is a magnesium alloy component or an aluminum alloy component.

An inner wall of at least one end of the connecting pipe 1 is provided with a pre-embedded nut 2, and the nut 2 and the connecting pipe 1 are coaxially arranged. In other words, the central axis of the connecting pipe 1 coincides with the central axis of the nut 2. Optionally, inner walls of two ends of the connecting pipe 1 are respectively provided with pre-embedded nuts 2.

The connecting plate 3 is a steel component, the connecting plate 3 is provided with a fixing hole, and the fastener 4 penetrates through the fixing hole and is in threaded fit with the nut 2. In other words, the fastener 4, such as a bolt fastener 4 or a screw fastener 4, can sequentially penetrate through the fixing hole on the connecting plate 3 and the nut 2 in the connecting pipe 1 so as to be in threaded fit with the nut 2, thereby realizing connection between the connecting plate 3 of the steel material and the connecting pipe 1 of the light alloy material, solving the problem of connection between the light alloy component and the steel component, and facilitating extensive use of the light alloy component. Furthermore, the nut 2 is pre-buried on the inner wall of at least one end of the connecting pipe 1, thereby achieving an anti-corrosion effect on the nut 2 to a certain extent. In addition, referring to the table 1 below, the density of the light alloy component is smaller than the density of the steel component. For example, the density of the aluminum alloy is 2.65-2.8 g/cm³, and the density of the magnesium alloy is 1.74-1.90 g/cm³. The connecting pipe 1 is the light alloy component, and the mass of the connecting assembly 100 is smaller. Thus, when the connecting assembly 100 is applied to other structures, such as a seat, the weight of the seat can be favorably reduced.

**Table 1 Performance comparison of several materials**

| Material | Density g/cm³ | Modulus GPa | Tensile strength Mpa | Yield strength Mpa | Elongation percentage | Specific modulus E/ρ | Specific strength σ/ρ |
|---|---|---|---|---|---|---|---|
| Magnesium alloy | 1.74-1.90 | 45 | >170 | >260 | >10 | 24-26 | 118-172 |
| Aluminum alloy | 2.65-2.80 | 70 | >245 | >265 | >10 | 25.9 | 73-128 |
| Carbon steel | 7.7-7.9 | 200 | >350 | >400 | >26 | 25 | 37-54 |

Specifically, under the condition of ensuring the same stress, by arranging the connecting assembly 100, the product design weight is reduced from 1.33 kg of a previous all-carbon steel material to 0.5 kg, the weight loss is 0.83 kg, the weight reduction ratio is 62.4%, and thus, the weight reduction effect is obvious.

Optionally, a sealing gasket or a sealing adhesive layer can be arranged between the fastener 4 and the connecting plate 3. When the fastener 4 penetrates through the fixing hole on the connecting plate 3 and is in threaded fit with the nut 2, a waterproof effect can be further achieved, thereby further improving the anti-corrosion effect on the nut 2. In the connecting assembly 100 according to the embodiments of the present invention, the connecting pipe 1 is the light alloy component, the inner wall of at least one end of the connecting pipe 1 is provided with the pre-embedded nut 2, and the fastener 4 penetrates through the fixing hole in the connecting plate 3 on the steel material and is in threaded fit with the nut 2 at one end of the connecting pipe, thereby realizing connection between the connecting plate 3 of the steel material and the connecting pipe 1 of the light alloy material, solving the problem of connection between the light alloy component and the steel component, facilitating extensive use of the light alloy component, and also achieving an anti-corrosion effect on the nut 2 to a certain extent.

According to some embodiments of the present invention, as shown in FIG. 1 and FIG. 2, the connecting pipe 1 includes: a body 11 and a fixing component 12. An inner wall of at least one end of the body 11 is provided with a generally annular containing groove, an end surface of one end of the containing groove is flush with an end surface of one end of the body 11, and the nut 2 is arranged in the containing groove. For example, the containing groove is a generally annular containing groove, the shape of the cross section of the containing groove is matched with the shape of the cross section of the nut 2, and the end surface of one end of the containing groove is flush with the end surface of one end of the body 11. Optionally, the containing groove can be processed by a milling process, thereby facilitating the processing.

At least a part of the fixing component 12 is positioned on the end surface of one end of the body 11 so as to limit the nut 2 in the containing groove. For example, the fixing component 12 is welded with the body 11 to be connected, so that at least a part of the fixing component 12 is positioned on the end surface of one end of the body 11, and the nut 2 is limited in the containing groove so as to enable the structure to be reliable.

Specifically, the fixing component 12 includes a first part and an annular second part, the first part is connected to a peripheral wall of the second part and is generally perpendicular to the second part, and when the second part is disposed on the end surface of one end of the body 11, the first part is disposed on the peripheral wall of one end of the body 11, thereby being favorable for further realizing reliable connection between the fixing component 12 and the body 11. Optionally, the first part is also formed annular, so that when the second part is disposed on the end surface of one end of the body 11, the first part is disposed on the whole circumferential direction of the peripheral wall of one end of the body 11.

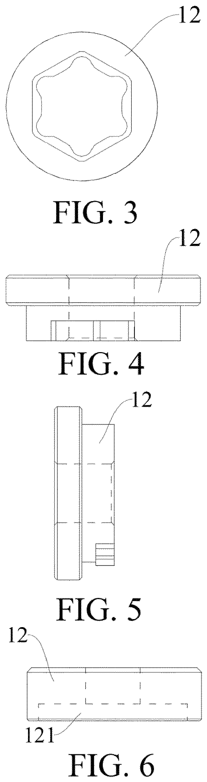

Of course, the present invention is not limited thereto. As shown in FIG. 1 to FIG. 7, the fixing component 12 is integrally disposed on the end surface of one end of the body 11.

Specifically, one end, away from the body 11, of the fixing component 12 is provided with an annular groove 121, and when the fastener 4 penetrates through the fixing hole on the connecting plate 3 and is in threaded fit with the nut, at least a part of the connecting plate 3 can be contained in the groove 121 so as to realize reliable connection between the connecting plate 3 and the connecting pipe 1.

Specifically, the outer diameter of the second part is equal to the outer diameter of the body 11, thereby being favorable for further optimizing the structure of the fixing component 12, and facilitating reliable cooperation between the fixing component 12 and the body 11.

Optionally, the connecting plate 3 is a high-strength steel component or a carbon steel component.

The seat according to the embodiments of the present invention is described below.

The seat according to the embodiments of the present invention includes the connecting assembly 100.

Specifically, the seat can include a seat basin and the connecting assembly 100. One end of the connecting plate 3 is disposed on the seat basin, the fastener 4 can penetrate through the fixing hole on the connecting plate 3 and is in threaded fit with the pre-buried nut 2 in the connecting pipe 1, thereby fixing the connecting pipe 1 on the seat basin to achieve the effect of supporting the seat basin.

The seat according to the embodiments of the present invention is provided with the connecting assembly 100, thereby realizing connection between the connecting plate 3 of the steel material and the connecting pipe 1 of the light alloy material, solving the problem of connection between the light alloy and the steel component, and being favorable for reducing the mass of the seat.

The vehicle according to the embodiments of the present invention is described below.

The vehicle according to the embodiments of the present invention includes the seat.

The vehicle according to the embodiments of the present invention is provided with the seat, thereby being favorable for reducing the overall mass of the vehicle, and reducing the energy consumption of the vehicle.

A manufacturing method of the connecting assembly 100 according to the embodiments of the present invention is described below.

The manufacturing method of the connecting assembly 100 according to the embodiments of the present invention includes the following steps: firstly, milling one end of the body 11 to process the containing groove, and putting the nut 2 into the containing groove; and secondly, welding the annular fixing component 12 to the end surface of one end of the body 11, then, enabling the fixing hole in the connecting plate 3 to be corresponding to one end, having the annular fixing component 12, of the connecting pipe 1, and enabling the bolt to penetrate through the fixing hole so as to be in threaded fit with the nut 2, thereby realizing processing and manufacturing of the connecting assembly 100.

The manufacturing method of the connecting assembly 100 according to the embodiments of the present invention solves the problem of connection between the light alloy and the steel component, and realizes connection between the connecting plate 3 of the steel material and the connecting pipe of the light alloy material.

In the descriptions of this specification, descriptions of reference terms "one embodiment", "some embodiments", "an example", "a specific example", or "some examples" are intended to indicate that particular features, structures, materials, or characteristics described with reference to the embodiment or example are included in at least one embodiment or example of the present invention. In this specification, schematic descriptions of the foregoing terms do not need to aim at a same embodiment or example. Besides, the specific features, the structures, the materials or the characteristics that are described may be combined in a proper manner in any one or more embodiments or examples. Moreover, different embodiments or examples and features of different embodiments or examples described in the specification can be synthesized and combined by those skilled in the art as long as no conflict occurs..

Although the embodiments of the present invention are shown and described above, it may be understood that the foregoing embodiments are examples, and cannot be understood as limitations to the present invention. A person of ordinary skill in the art may make changes, modifications, replacements, and variations to the foregoing embodiments without departing from the scope of the present invention.

## Claims

1. A connecting assembly, comprising:
a connecting pipe, an inner wall of at least one end of the connecting pipe being provided with a pre-embedded nut, and the nutbeing coaxial with the connecting pipe ;
a connecting plate, the connecting plate being provided with a fixing hole; and
a fastener, the fastener penetrating through the fixing hole and being in threaded fit with the nut,
wherein the connecting pipe is a light alloy component, and the connecting plate is a steel component.

2. The connecting assembly according to claim 1, wherein the light alloy is magnesium alloy or aluminum alloy.

3. The connecting assembly according to claim 1, wherein the fastener is a bolt fastener.

4. The connecting assembly according to any one of claims 1 to 3, wherein the connecting pipe comprises:
a body, an inner wall of at least one end of the body being provided with a generally annular containing groove, an end surface of one end of the containing groove being flush with an end surface of one end of the body, and the nut being disposed in the containing groove; and
a fixing component, at least a part of the fixing component being disposed on an end surface of one end of the body so as to limit the nut in the containing groove.

5. The connecting assembly according to claim 4, wherein the fixing component comprises a first part and an annular second part, the first part is connected to a peripheral wall of the second part and is generally perpendicular to the second part, and when the second part is disposed on the end surface of one end of the body, the first part is disposed on a peripheral wall of one end of the body.

6. The connecting assembly according to claim 4, wherein the fixing component is welded with the body to be connected.

7. The connecting assembly according to claim 4, wherein the containing groove is processed by a milling process.

8. The connecting assembly according to claim 5, wherein an outer diameter of the second part is equal to an outer diameter of the body.

9. A seat, comprising the light alloy connecting assembly according to any one of claims 1 to 8.

10. A vehicle, comprising the seat according to claim 9.

11. A manufacturing method of the connecting assembly according to any one of claims 4 to 8, comprising the following steps:
milling one end of a body to process a containing groove, and putting a nut into the containing groove;
welding an annular fixing component to an end surface of one end of the body;
enabling a fixing hole of a connecting plate to be corresponding to one end, having the annular fixing component, of the connecting pipe; and
enabling a bolt to penetrate through the fixing hole so as to be in threaded fit with the nut.
